# EUROPEAN PATENT APPLICATION

(11) **EP 3 348 139 A1**
(43) Date of publication of application: **18.07.2018**
(21) Application number: 18150974.6
(22) Date of filing: 10.01.2018
(51) Int. Cl.: A01K 1/02, A01K 1/00

(54) **MODULAR SYSTEM FOR CONSTRUCTION OF A PIGGERY WITH MANURE CHANNELS AND A PIGGERY COMPRISING SUCH A MODULAR SYSTEM**

(30) Priority: 13.01.2017 DK 201700035; 25.04.2017 DK 201770278
(71) Applicant: IKADAN SYSTEM A/S, 7430 Ikast (DK)
(72) Inventor: Kongsgaard, Bjarne, 8600 Silkeborg (DK)
(74) Representative: Zacco Denmark A/S

(57) **Abstract**

A modular system for construction of a piggery with a plurality of pigsties with underlying manure channels is disclosed, which modular system comprises one or more wall elements (1), which are designed to be able to constitute both manure channel walls and pigsty partitions, and to be placeable either directly on a compressed bed of sand (4) or with a membrane placed between a compressed bed of sand and the one or more wall elements, a watertight channel membrane (7) for each manure channel for ensuring the imperviousness of the sides, bottom and ends thereof, a plurality of carrier profiles for being mounted between two wall elements perpendicular to these or between a wall element and another partition or wall in the piggery perpendicular to these, and one or more gratings (8) for being mounted between two carrier profiles. Furthermore, a piggery, which is at least partly constructed from such a modular system, is disclosed.

## Description

The present invention relates to a modular system for construction of a piggery with manure channels under the individual pigsties and to a piggery constructed at least partly from such a modular system.

### Background of the invention

Piggeries are usually constructed with slatted floors and underlying manure channels made of concrete, foundation blocks and concrete elements, which are cast together on the site. Such a solution with base foundations and concrete channels is costly and labour-intensive and it can be very difficult to remove or replace if it is desired to change the method of working or perhaps stop the operation.

### Brief description of the invention

It is an object of the present invention to provide a modular system for construction of piggeries with underlying manure channels without the above-mentioned disadvantages of solutions known within the art.

The present invention relates to a modular system for construction of a piggery with a plurality of pigsties with underlying manure channels, which modular system comprises one or more wall elements, which are designed to be able to constitute both manure channel walls and pigsty partitions, and to be placeable either directly on a compressed bed of sand or with a membrane placed between a compressed bed of sand and the one or more wall elements, a watertight channel membrane for each manure channel for ensuring the imperviousness of the sides, bottom and ends thereof, a plurality of carrier profiles for being mounted between two wall elements perpendicular to these or between a wall element and another partition or wall in the piggery perpendicular to these, and one or more gratings for being mounted between two carrier profiles.

Such a modular system allows for a much cheaper and less labour-intensive construction of a piggery, among other things because it is not necessary to cast a bottom for the manure channels, since the wall elements can simply be placed on a compressed bed of sand.

In an embodiment of the invention, the wall elements comprise a middle plate extending throughout the full height of the wall element and at the bottom on both sides is covered with a side plate, the height of which corresponds to the desired height of the manure channels.

Such a construction of the wall element results in a construction with high strength, which can withstand the side pressure from the manure. At the same time, a wall element with a wide base is obtained, minimising the risk of the wall element sinking into the bed, onto which it is placed.

In an embodiment of the invention, the middle plate is an extruded profile plate, a fibreboard or an injection moulded cell plate.

In an embodiment of the invention, the side plates are designed as injection moulded cell plates.

The use of injection moulded cell plates results in a fine combination of low weight and high strength.

In an embodiment of the invention, the middle plate and the side plates are butt-welded flat to flat.

This results in a high load strength of the wall element.

In an embodiment of the invention, the carrier profiles are arranged to rest on the upper edges of the side plates of the wall elements.

In an embodiment of the invention, the wall elements consist of a single plate, which is provided with a wide base throughout the length of the plate.

This is another possible construction of the wall element, which also involves a wide base, so that the risk of the wall element sinking into the bed, onto which it is placed, is minimised.

In an embodiment of the invention, the carrier profiles are mounted onto the side of the wall elements.

In an embodiment of the invention, the wall elements are moulded as double-concave units with shelves for the carrier profiles.

This is a third possible construction of the wall element, which also involves a wide base, so that the risk of the wall element sinking into the bed, onto which it is placed, is minimised and a strong base, so that the side pressure from the manure can be withstood.

In an embodiment of the invention, the modular system further comprises one or more stiffening supports for being placed under the watertight channel membrane between two wall elements or between a wall element and another partition or wall in the piggery.

Such stiffening supports ensure the correct distance between neighbouring wall elements and minimises the risk of them toppling during the construction of the modular system. Furthermore, together with the gratings, these stiffening supports ensure that the wall elements are not displaced by the pressure from the manure if there is a full manure channel on one side of the wall element and an empty manure channel on the other side.

In an aspect of the invention, it relates to a piggery, which is at least partly constructed from a modular system according to any of the preceding claims.

In an embodiment of the invention, the wall elements of the modular system are placed within the piggery in connection with a reconstruction of this, for instance on an existing concrete bed or on a compressed bed of sand on top thereof.

In this way, a significant part of the costs related to reconstruction of a piggery can be saved by using the modular system according to the present invention.

In an embodiment of the invention, the wall elements of the modular system are supported by point foundations, for instance under the ends of the wall elements and under the middle of the wall elements.

Although the wall elements are designed to be able to rest directly onto a compressed bed of sand, the use of a few point foundations can provide additional assurance that the wall elements will not sink over time because the bed of sand beneath them settles.

### Drawings

In the following, a few exemplary embodiments of the invention are described in more detail with reference to the drawings, of which
- Fig. 1: shows a wall element according to an embodiment of the invention,
- Fig. 2: illustrates a first step in the construction of a piggery according to an embodiment of the invention,
- Fig. 3: illustrates a second step in the construction of a piggery according to an embodiment of the invention,
- Fig. 4: illustrates a third step in the construction of a piggery according to an embodiment of the invention,
- Fig. 5: illustrates a fourth step in the construction of a piggery according to an embodiment of the invention,
- Fig. 6: illustrates a fifth step in the construction of a piggery according to an embodiment of the invention, and
- Fig. 7: illustrates a sixth step in the construction of a piggery according to an embodiment of the invention.

### Detailed description of the invention

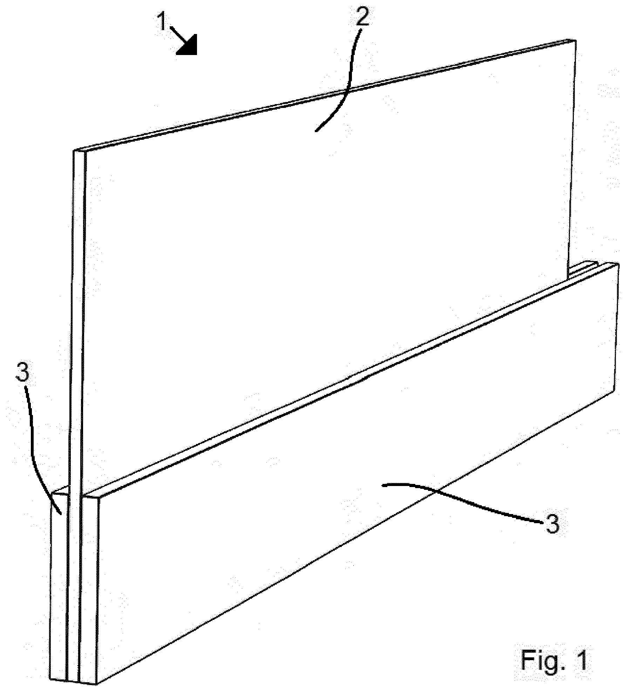

Fig. 1 shows a wall element 1 according to an embodiment of the invention. The shown wall element 1 consists of a middle plate 2, which extends throughout the full height of the wall element 1 and at the bottom on both sides is covered with a side plate 3, the height of which corresponds to the desired height of the manure channels

The middle plate 2 can, for instance, be an extruded profile plate, a fibreboard like the ones, which are often used for partitioning the sties in a piggery, or an injection moulded cell plate. The side plates 3 can be designed as injection moulded cell plates and the plates 2, 3 can be butt-welded flat to flat. What is important is that a construction of the wall element 1 is obtained, which is capable of withstanding the side pressure from the manure in the manure channel below the pigsty.

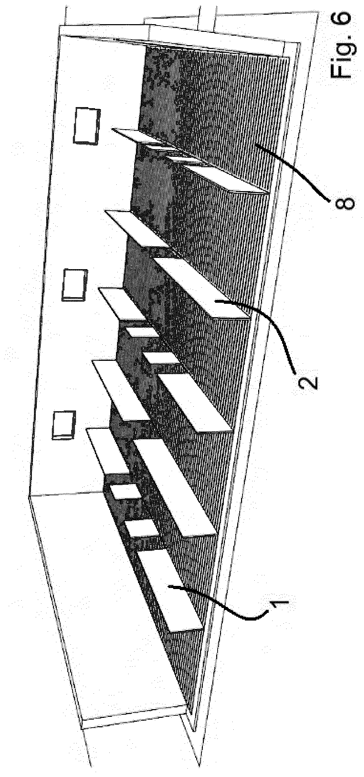

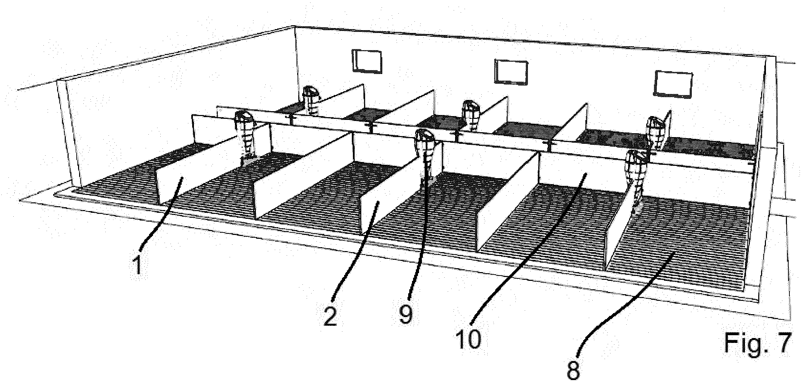

The shown embodiment of the wall element 1 has the advantage that the upper edge of the side plates 3 forms natural shelves, upon which the carrier profiles (not shown) for the gratings 8, which are shown in Figs. 6 and 7, can rest.

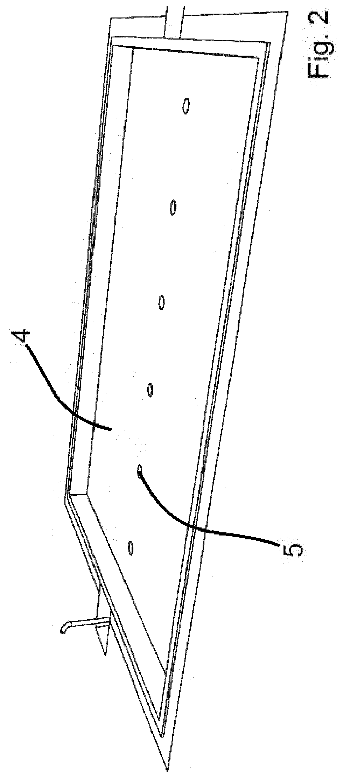

Fig. 2 illustrates a first step in the construction of a piggery according to an embodiment of the invention. A compressed bed of sand 4 is arranged around a series of discharge points 5, through which the manure can pass from the manure channels to a manure tank outside the piggery.

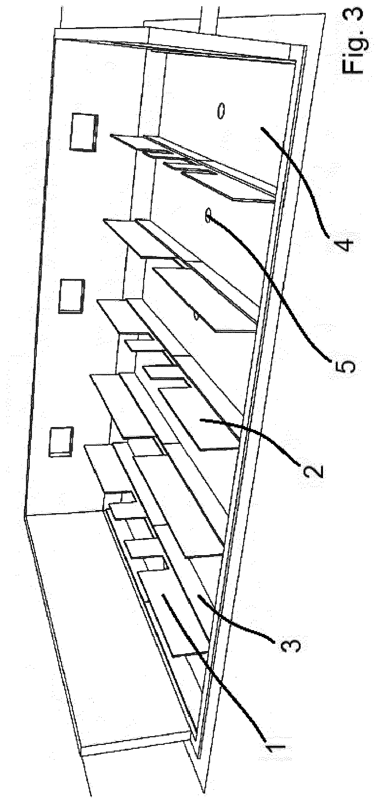

Fig. 3 illustrates a second step in the construction of the same piggery, in which a series of wall elements 1 are placed upon the compressed bed of sand 4. In some embodiments of the invention, a membrane (not shown), typically made from a plastic material, can be placed between the compressed bed of sand 4 and the wall elements 1.

The gaps in the middle plates 2 of the wall elements 1 make room for automatic dry feeders 9 and passage between the pigsties as shown in Fig. 7.

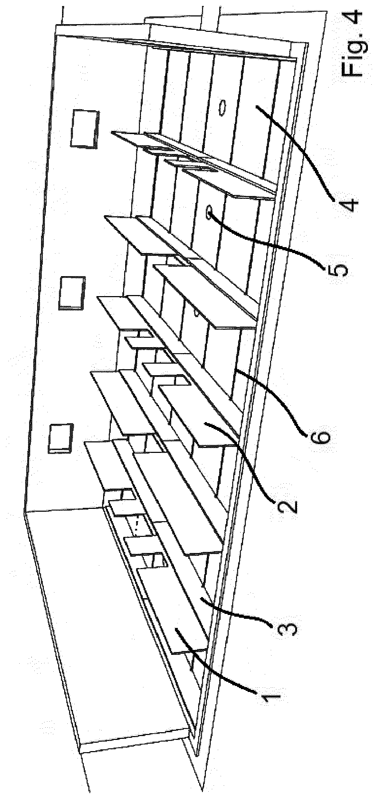

Fig. 4 illustrates a third step in the construction of the piggery, in which a series of stiffening supports 6 have are placed between the wall elements 1 for ensuring the correct distance between the wall elements 1 and for minimising the risk of them toppling during the construction of the piggery.

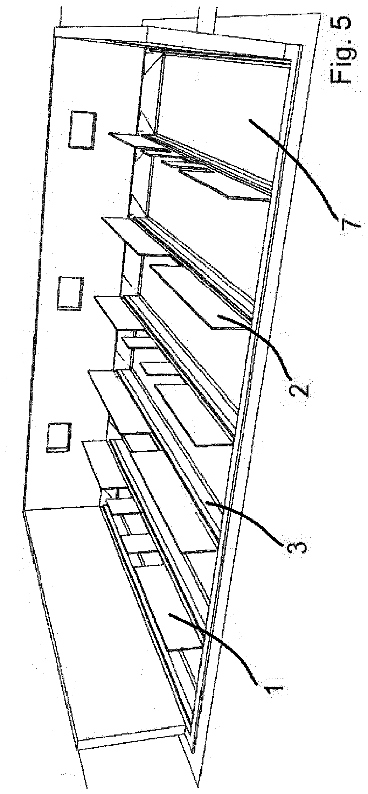

Fig. 5 illustrates a fourth step in the construction of the piggery, in which each of the manure channels has been lined with a watertight channel membrane 7, the purpose of which is to ensure that the sides, bottom and ends of the manure channel are impervious.

Fig. 6 illustrates a fifth step in the construction of the piggery, in which the floor of the pigsties in the form of a series of gratings 8 are mounted. The gratings 8 rest upon a series of carrier profiles (not shown), which are mounted between two wall elements 1 perpendicular to these or between a wall element 1 and an outer wall of the piggery perpendicular to these.

Finally, Fig. 7 illustrates a sixth and last step in the construction of the piggery, in which automatic dry feeders 9 and gables 10 are mounted in the pigsties in the piggery.

The sizes of the pigsties can be varied through different choices of the number and lengths of the wall elements 1 and by the positioning of the gables 10, but typical dimensions could be a width of about 2.4 meters and a length of 5 meters and a bit.

### List of reference numbers

1. Wall element
2. Middle plate
3. Side plate
4. Compressed bed of sand
5. Discharge point for manure
6. Stiffening support between wall elements
7. Channel membrane
8. Grating
9. Automatic dry feeder
10. Gable for pigsty

## Claims

1. A modular system for construction of a piggery with a plurality of pigsties with underlying manure channels, which modular system comprises
one or more wall elements (1), which are designed to be able to constitute both manure channel walls and pigsty partitions, and to be placeable either directly on a compressed bed of sand (4) or with a membrane placed between a compressed bed of sand and the one or more wall elements,
a watertight channel membrane (7) for each manure channel for ensuring the imperviousness of the sides, bottom and ends thereof,
a plurality of carrier profiles for being mounted between two wall elements perpendicular to these or between a wall element and another partition or wall in the piggery perpendicular to these, and
one or more gratings (8) for being mounted between two carrier profiles.

2. The modular system according to claim 1, wherein the wall elements comprise a middle plate (2) extending throughout the full height of the wall element and at the bottom on both sides is covered with a side plate (3), the height of which corresponds to the desired height of the manure channels.

3. The modular system according to claim 2, wherein the middle plate is an extruded profile plate, a fibreboard or an injection moulded cell plate.

4. The modular system according to claim 2 or 3, wherein the side plates are designed as injection moulded cell plates.

5. The modular system according to any of the claims 2-4, wherein the middle plate and the side plates are butt-welded flat to flat.

6. The modular system according to any of the claims 2-5, wherein the carrier profiles are arranged to rest on the upper edges of the side plates of the wall elements.

7. The modular system according to claim 1, wherein the wall elements consist of a single plate, which is provided with a wide base throughout the length of the plate.

8. The modular system according to claim 7, wherein the carrier profiles are mounted onto the side of the wall elements.

9. The modular system according to claim 1, wherein the wall elements are moulded as double-concave units with shelves for the carrier profiles.

10. The modular system according to any of the preceding claims, further comprising one or more stiffening supports (6) for being placed under the watertight channel membrane between two wall elements or between a wall element and another partition or wall in the piggery.

11. A piggery, which is at least partly constructed from a modular system according to any of the preceding claims.

12. The piggery according to claim 11, wherein the wall elements (1) of the modular system are placed within the piggery in connection with a reconstruction of this, for instance on an existing concrete bed or on a compressed bed of sand (4) on top thereof.

13. The piggery according to claim 11 or 12, wherein the wall elements of the modular system are supported by point foundations, for instance under the ends of the wall elements and under the middle of the wall elements.
